Europäisches Patentamt

European Patent Office

Office européen des brevets

(19)

(11) Numéro de publication : **0 288 372 B1**

# FASCICULE DE BREVET EUROPEEN

(12)

(45) Date de publication du fascicule du brevet :
27.03.91 **Bulletin 91/13**

(51) Int. Cl.⁵ : **B65G 59/10,** B65G 59/06

(21) Numéro de dépôt : 88400940.8

(22) Date de dépôt : 18.04.88

(54) **Dispositif de dépilage de récipients et machine de conditionnement équipée de ce dispositif.**

(30) Priorité : 24.04.87 FR 8705847

(43) Date de publication de la demande :
26.10.88 **Bulletin 88/43**

(45) Mention de la délivrance du brevet :
27.03.91 **Bulletin 91/13**

(84) Etats contractants désignés :
**AT BE CH DE ES GB IT LI NL SE**

(56) Documents cités :
**US-A- 2 618 394**
**US-A- 3 420 407**

(73) Titulaire : **CMB REMY**
**50 Avenue des Fenots**
**F-28104 Dreux Cédex (FR)**

(72) Inventeur : **Lemaire, Didier**
**Rue de la Pinède Les Bochets**
**F-28500 Cherisy (FR)**
Inventeur : **Dronet, Jean-Marc**
**Le Bourg-Neuvy au Houlme**
**F-61210 Putanges Pont Ecrepin (FR)**

(74) Mandataire : **Polus, Camille et al**
**c/o Cabinet Lavoix 2, Place d'Estienne d'Orves**
**F-75441 Paris Cedex 09 (FR)**

## Description

La présente invention a essentiellement pour objet un dispositif de dépilage de récipients tels que par exemple des gobelets ou des pots.

Elle vise également une machine de conditionnement de récipients équipée du dispositif ci-dessus.

Les machines de conditionnement de récipients comprennent généralement un poste de dépilage des récipients, ce poste étant essentiellement constitué par un magasin dans lequel les récipients sont empilés les uns dans les autres et sous lequel peuvent être prévus des moyens permettant le dépilage un à un des récipients à partir de la pile de récipients dans le magasin.

Toutefois, le magasin contenant les récipients empilés qui comportent généralement un rebord, ne peut pas s'adapter à des formes ou dimensions variées de récipients. Il en est de même, en ce qui concerne les moyens situés sous le magasin pour permettre le dépilage un à un des récipients.

Il en résulte que, lorsqu'on veut conditionner sur une machine plusieurs séries de récipients ayant des formes et/ou dimensions différentes, il convient de transformer ou de changer le poste de dépilage après le conditionnement de chaque série de récipients.

Il faut également observer ici qu'on doit, de la même façon, remplacer les moyens prévus sur le convoyeur de la machine pour recevoir et supporter les récipients issus du poste de dépilage, et cela pour chaque nouvelle série de récipients à conditionner.

Tout ceci est, comme on le comprend, coûteux sur le plan de la main d'oeuvre et des systèmes de remplacement à prévoir tant au niveau du poste de dépilage qu'au niveau du convoyeur de la machine recevant les récipients à conditionner.

Aussi, la présente invention a pour but de remédier aux inconvénients ci-dessus en proposant un système de dépilage des récipients qui peut s'adapter à toute forme ou dimension de récipients ou gobelets destinés en particulier à subir diverses opérations sur une machine de conditionnement.

A cet effet, l'invention a pour objet un dispositif de dépilage de récipients, tels que par exemple des gobelets, empilés dans un magasin et comportant des moyens permettant le dépilage un à un des récipients à partir de la pile de récipients dans le magasin, caractérisé en ce que lesdits moyens situés sous le magasin sont constitués par deux parallèlogrammes déformables superposés actionnables indépendamment l'un de l'autre pour effectuer le dépilage un à un des récipients, et pouvant s'adapter à n'importe quelle forme et/ou dimension de récipient.

On précisera ici que, suivant une autre caractéristique de l'invention, les deux parallèlogrammes précités comportent chacun au moins une languette faisant saillie vers l'intérieur du parallèlogramme et sur laquelle peut prendre appui le rebord situé à la partie supérieure des récipients.

Selon encore une autre caractéristique de l'invention, le magasin précité est lui-même constitué par un parallèlogramme déformable pouvant s'adapter à n'importe quelle forme et/ou dimension de récipients.

On précisera encore ici que la déformation du parallèlogramme constituant le magasin ainsi que la déformation des deux parallèlogrammes superposés sous-jacents sont commandées simultanément par un système approprié, tel que par exemple un système à tiges et écrous, pour s'adapter à la forme et/ou la dimension des récipients à dépiler.

Selon encore une autre caractéristique de l'invention, les deux parallèlogrammes superposés précités sont déformables séparément par un moyen, tel que par exemple un vérin, associé à chacun de ces deux parallèlogrammes et de préférence au système précité à tiges et écrous.

Il convient encore de noter que chacun des parallèlogrammes précités fait avantageusement partie d'une suite de parallèlogrammes déformables et constitués par des biellettes articulées.

L'invention vise également une machine de conditionnement de récipients, tels que par exemple des gobelets, comportant au moins un convoyeur à chaînes ou analogues sans fin au-dessus duquel sont aménagés plusieurs postes dont un poste de dépilage des récipients, cette machine étant caractérisée en ce qu'elle est équipée d'un dispositif de dépilage répondant à l'une et/ou l'autre des caractéristiques ci-dessus.

Mais d'autres caractéristiques et avantages de l'invention apparaîtront mieux dans la description détaillée qui suit et se réfère aux dessins annexés donnés uniquement à titre d'exemple, et dans lesquels :

La figure 1 est une vue de dessus d'un poste de dépilage selon l'invention ;

La figure 2 est une vue de dessous de ce poste ;

La figure 3 est une vue en coupe faite suivant la ligne III-III de la figure 1 ; et

Les figures 4 à 7 illustrent schématiquement les différentes phases conduisant au dépilage un à un des récipients destinés par exemple à être déposés sur le brin supérieur d'un convoyeur appartenant à une machine de conditionnement de récipients.

Suivant un exemple de réalisation, et en se reportant aux dessins annexés, un dispositif de dépilage conforme à cette invention comprend essentiellement un magasin 1 dans lequel peuvent être empilés des récipients, tels que par exemple des gobelets, et, en-dessous de ce magasin deux parallèlogrammes déformables et superposés 2 et 3.

Le magasin 1 est constitué lui aussi par un parallèlogramme déformable 4 de façon à pouvoir s'adapter, tout comme les parallèlogrammes déformables superposés 2 et 3, à n'importe quelle forme et/ou dimension de récipient.

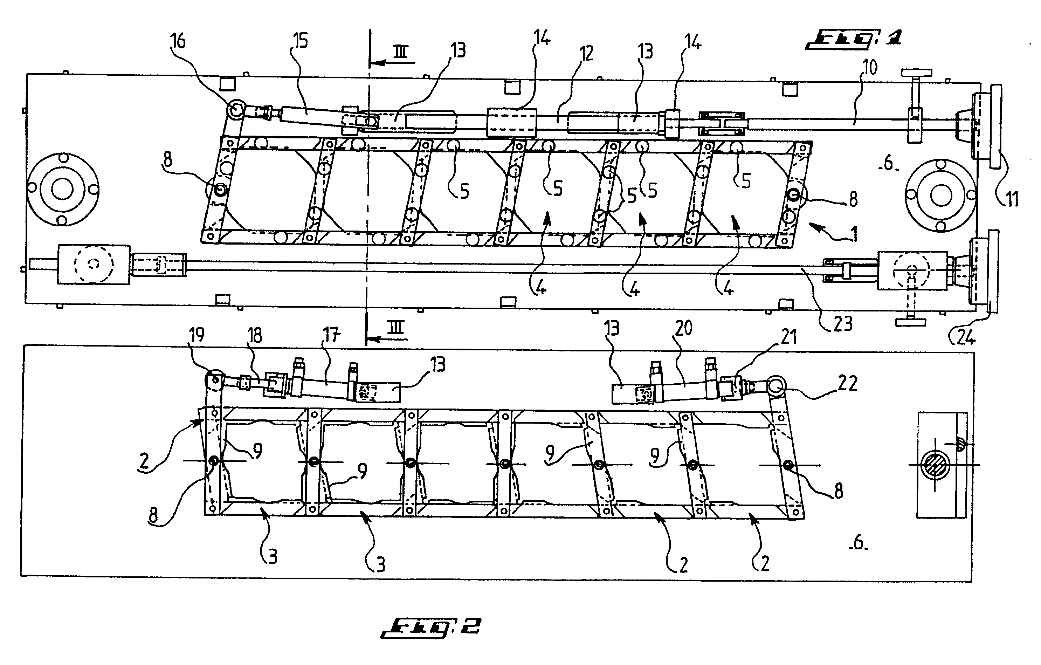

En réalité, comme on le voit bien sur la figure 1, le parallèlogramme déformable formant le magasin 1 comprend une suite de parallèlogrammes déformables 4 et constitués par des biellettes articulées.

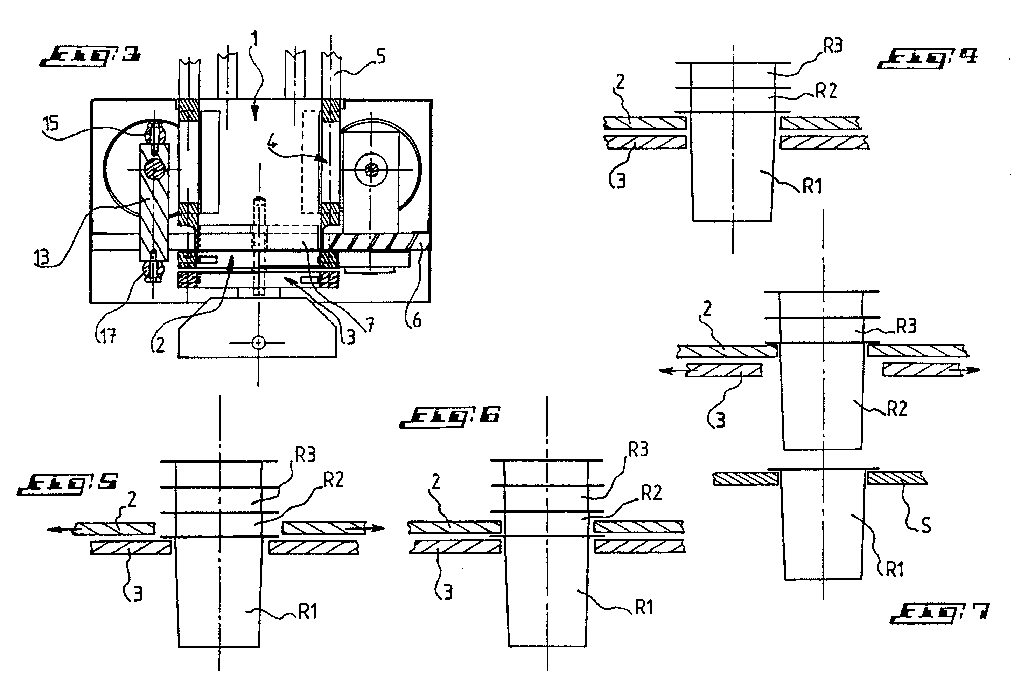

Il en est de même pour ce qui concerne les parallèlogrammes superposés 2 et 3 qui, comme on le voit bien sur la figure 2, comprennent eux aussi une suite de parallèlogrammes déformables 2 et 3 et constitués par des biellettes articulées.

On a montré en 5 sur les figures 1 et 3 des tiges verticales de guidage des récipients empilés, ces tiges étant solidaires des biellettes réalisant la suite des parallèlogrammes déformables 4 constituant le magasin 1.

Sur la figure 3, on voit que les parallèlogrammes 4 constituant le magasin et les parallèlogrammes 2 et 3 superposés et situés sous ce magasin sont articulés sur une plaque 6 formant en quelque sorte le bâti du poste de dépilage et comportant évidemment des orifices 7 pour le passage des récipients.

On a montré en 8 sur les figures 1 et 2 des axes de pivotement des parallèlogrammes 2, 3 et 4 sur la plaque 6.

Les biellettes articulées constituant la suite de parallèlogrammes 2 et la suite de parallèlogrammes 3 comportent des languettes 9, bien visibles sur la figure 2 et faisant saillie vers l'intérieur du parallèlogramme de façon à permettre le supportage des récipients par leurs rebords, une fois que lesdits parallèlogrammes ont été déformés de façon à s'adapter à la forme ou à la dimension du récipient ou gobelet à conditionner.

A cet égard, les parallèlogrammes déformables 4 du magasin 1, ainsi que les parallèlogrammes déformables 2 et 3 sous ce magasin peuvent être déformés simultanément par un système visible notamment sur la figure 1.

Suivant un mode de réalisation préféré, ce système comprend un axe 10 porté par la plaque 6, dont la rotation est commandée par un bouton ou une manivelle 11 et qui est raccordée à une tige filetée formant vis 12 engrenant avec des écrous 13.

On a montré en 14 des paliers dans lesquels tourne la tige filetée 12.

L'écrou 13 situé sur la partie gauche de la figure 1 est attelé à une biellette 15 articulée en 16 sur les parallèlogrammes déformables 4 constituant le magasin 1, de façon à permettre la déformation de ces parallèlogrammes pour qu'ils s'adaptent à la forme et/ou la dimension des récipients.

L'écrou 13 précité est également attelé au corps d'un vérin 17 dont la tige 18 est articulée en 19 sur les parallèlogrammes articulés 3, comme on le voit sur la figure 2.

Quant à l'écrou 13 visible sur la droite des figures 1 et 2, il est attelé au corps d'un vérin 20 dont la tige 21 est articulée en 22 sur le groupe de parallèlogrammes 2 superposés aux parallèlogrammes 3.

On a montré en 23 sur la figure 1 une tige actionnable par une manivelle 24 et susceptible de régler la hauteur du magasin constitué par les parallèlogrammes 4.

On comprend donc de ce qui précède qu'en manoeuvrant la manivelle 11, les écrous 13 se déplaceront sur la vis 12 pour commander simultanément la déformation des parallèlogrammes articulés déformables 4, 3 et 2. Ainsi, le magasin 1 et les lignes de parallèlogrammes sous-jacents 2 et 3 seront adaptés à la forme et aux dimensions des récipients.

Ceci étant fait, on utilisera les vérins 17 et 20 pour commander séparément et respectivement les parallèlogrammes 3 et 2, afin de permettre le dépilage un à un des récipients empilés suivant une ligne dans les parallèlogrammes déformables 4 constituant le magasin 1.

Mais, dans un but de clarté, on décrira maintenant en détail les différentes phases du dépilage des récipients en se reportant aux figures 4 à 7.

Comme expliqué précédemment on adapte tout d'abord les parallèlogrammes 4, 2 et 3 à la forme ou la dimension des récipients empilés $R_1$, $R_2$, $R_3$...$R_n$ en agissant sur la manivelle 11, de sorte que le rebord supérieur du premier récipient $R_1$ de la pile prend appui sur les parallèlogrammes 2 situés sous le magasin 1, et cela par l'intermédiaire des languettes 9.

C'est ce que l'on voit sur la figure 4 où les languettes 9 n'ont pas été représentées dans un but de simplicité.

On actionne alors le vérin 20 qui commande la déformation ou l'ouverture des parallèlogrammes 2, ce qui, comme on le voit sur la figure 5, provoque la descente de la pile de récipients qui prennent appui par l'intermédiaire du récipient $R_1$ sur les parallèlogrammes 3 sous-jacents aux parallèlogrammes 2.

Ensuite, on actionne à nouveau le vérin 20 qui provoque la fermeture des parallèlogrammes 2, lesquels s'interposent entre le rebord du récipient $R_1$ et le rebord du récipient $R_2$ qui sera donc retenu, comme on le comprend en se reportant à la figure 6.

Enfin, comme on le voit sur la figure 7, on actionne le vérin 17 qui provoque l'ouverture des parallèlogrammes 3, ce qui libère le récipient $R_1$, lequel va être déposé sur des supports S transversalement solidaires des chaînes d'un convoyeur, ces supports pouvant être des plaques percées d'orifices ou encore des parallèlogrammes articulés.

On a donc réalisé suivant l'invention un dispositif de dépilage particulièrement fiable, simple et qui procure l'avantage de pouvoir s'adapter immédiatement à n'importe quelle forme ou dimension de récipient.

Les biellettes des parallèlogrammes articulés peuvent être réalisées en un matériau quelconque et revêtir une forme quelconque, telle que par exemple une forme de paroi.

Les écrous 13 montés coulissant dans la plaque 6, comme on le voit sur la figure 3, peuvent avoir une forme quelconque et appropriée pour être attelés à la biellette 15 et aux vérins 17 et 20.

## Revendications

1. Dispositif de dépilage de récipients, tels que par exemple des gobelets, empilés dans un magasin (1) et comportant des moyens permettant le dépilage un à un des récipients à partir de la pile de récipients dans le magasin, caractérisé en ce que lesdits moyens situés sous le magasin sont constitués par deux parallèlogrammes déformables superposés (2, 3) actionnables indépendamment l'un de l'autre pour effectuer le dépilage et pouvant s'adapter à n'importe quelle forme et/ou dimension de récipient.

2. Dispositif selon la revendication 1, caractérisé en ce que les deux parallèlogrammes précités (2, 3) comportent chacun au moins une languette (9) faisant saillie vers l'intérieur du parallèlogramme et sur laquelle peut prendre appui le rebord situé à la partie supérieure des récipients.

3. Dispositif selon la revendication 1 ou 2, caractérisé en ce que le magasin précité (1) est lui-même constitué par un parallèlogramme déformable (4) pouvant s'adapter à n'importe quelle forme et/ou dimension de récipient.

4. Dispositif selon l'une des revendications 1 à 3, caractérisé en ce que la déformation du parallèlogramme (4) constituant le magasin (1) ainsi que la déformation des deux parallèlogrammes superposés sous-jacents (2, 3) sont commandés simultanément par un système approprié, tel que par exemple à tiges et écrous (10, 12, 13), pour s'adapter à la forme et/ou la dimension des récipients à dépiler.

5. Dispositif selon la revendication 1, 2 ou 4, caractérisé en ce que les deux parallèlogrammes superposés précités (2, 3) sont déformables séparément par un moyen tel que par exemple un vérin (17, 20) associé à chacun de ces deux parallèlogrammes et de préférence au système précité à tiges et écrous (10, 12, 13).

6. Dispositif selon l'une des revendications précédentes, caractérisé en ce que chacun des parallèlogrammes précités (2, 3, 4) fait partie d'une suite de parallèlogrammes déformables et constitués par des biellettes articulées.

7. Machine de conditionnement de récipients, tels que par exemple des gobelets, comportant au moins un convoyeur à chaînes ou analogues sans fin au-dessus duquel sont aménagés plusieurs postes dont un poste de dépilage des récipients, caractérisé en ce qu'elle est équipée d'un dispositif de dépilage selon l'une des revendications 1 à 6.

## Ansprüche

1. Einrichtung zum Entstapeln von Behältern, wie beispielsweise Bechern, die in einem Magazin 1 gestapelt sind, mit Mitteln, die es gestatten, die Behälter einen nach dem anderen von dem Behälterstapel in dem Magazin abzunehmen, dadurch **gekennzeichnet**, daß diese unter dem Magazin angeordneten Mittel gebildet werden durch zwei überlagerte deformierbare Parallelogramme (2, 3), die unabhängig voneinander betätigbar sind, um das Entstapeln zu bewirken, und die sich an beliebige Behälterformen und/oder -abmessungen anpassen können.

2. Einrichtung nach Anspruch 1, dadurch **gekennzeichnet**, daß die beiden vorgenannten Parallelogramme (2, 3) jeweils wenigstens eine Zunge (9) aufweisen, die in das Innere des Parallelogramms vorspringt und auf der sich der im oberen Bereich der Behälter angebrachte Rand abstützten kann

3. Einrichtung nach Anspruch 1 oder 2, dadurch **gekennzeichnet**, daß das Magazin (1) seinerseits durch ein deformierbares Parallelogramm (4) gebildet sind, das sich an beliebige Behälterformen und /oder -abmessungen anpassen kann.

4. Einrichtung nach einem der Ansprüche 1 bis 3, dadurch **gekennzeichnet**, daß die Deformation des das Magazin (1) bildenden Parallelogramms (4) sowie die Deformation der beiden darunter angeordneten überlagerten Parallelogramme (2, 3) gleichzeitig durch ein geeignetes System wie beispielsweise einen Spindelantrieb (10, 12, 13) gesteuert werden, um sich an die Form und/oder die Größe der zu entstapelnden Behälter anzupassen.

5. Einrichtung nach Anspruch 1, 2 oder 4, dadurch **gekennzeichnet**, daß die beiden vorgenannten überlagerten Programme (2, 3) getrennt deformierbar sind, mit Hilfe von Mitteln wie beispielsweise einem Zylinder (17, 20), die jedem der beiden Parallelogramme und vorzugsweise dem vorgenannten Spindelantrieb (10, 12, 13) zugeordnet sind.

6. Einrichtung nach einem der vorstehenden Ansprüche, dadurch **gekennzeichnet**, daß jedes der vorgenannten Parallelogramme (2, 3, 4) Teil einer Folge von deformierbaren Parallelogrammen ist, die durch Gelenkarme gebildet werden

7. Handhabungsmaschine für Behälter wie beispielsweise Becher, mit wenigstens einem endlosen Kettenförderer oder dergleichen, über welchem mehrere Geräte einschließlich eines Entstapelungsgerätes angeordnet sind, dadurch **gekennzeichnet**, daß sie mit einer Entstapelungseinrichtung nach einem der Ansprüche 1 bis 6 ausgerüstet ist.

## Claims

1. A device for unstacking containers such as, for example, goblets stacked in a magazine (1), the device comprising means enabling the containers to be unstacked one by one from the stack of containers in the magazine, characterized in that said means, which are located beneath the magazine, are formed by two superimposed deformable parallelograms (2, 3) which can be actuated independently of one another to perform unstacking and can adapt themselves to any shape and/or size of container.

2. A device according to claim 1, characterized in that the two said parallelograms (2, 3) each comprise at least one tongue (9) which projects towards the inside of the parallelogram and against which the edge at the upper portion of the containers can bear.

3. A device according to claims 1 or 2, characterized in that said magazine (1) is formed by a deformable parallelogram (4) which can adapt itself to any shape and/or size of container.

4. A device according to one of claims 1 to 3, characterized in that the deformation of the parallelogram (4) forming the magazine (1) and also the deformation of the two subjacent superimposed parallelograms (2, 3) are simultaneously controlled by a suitable system such as, for example, a system of rods and nuts (10, 12, 13) to adapt themselves to the shape and/or size of the containers to be unstacked.

5. A device according to claims 1, 2 or 4, characterized in that said two superimposed parallelograms (2, 3) can be deformed separately by means such as, for example, a jack (17, 20) associated with each of said two parallelograms and preferably with said system of rods and nuts (10, 12, 13).

6. A device according to one of the preceding claims, characterized in that each of said parallelograms (2, 3, 4) forms part of a row of deformable parallelograms formed by articulated small rods.

7. A machine for treating containers such as, for example, goblets, comprising at least one endless chain conveyor or the like above which a number of stations are provided, including a container unstacking station, characterized in that the machine is equipped with an unstacking device as set forth in one of claims 1 to 6.

Fig. 1

Fig. 2

EP 0 288 372 B1

Fig.4

Fig.7

Fig.6

Fig.3

Fig.5